**Europäisches Patentamt**

**European Patent Office**

**Office européen des brevets**

(11) Publication number: **0 145 238**
**B1**

(12) **EUROPEAN PATENT SPECIFICATION**

(45) Date of publication of patent specification: **26.04.89**

(21) Application number: **84307566.4**

(22) Date of filing: **02.11.84**

(51) Int. Cl.⁴: **F 16 B 5/06, F 16 B 19/02**

(54) **Laterally adjustable fasteners.**

(30) Priority: **21.11.83 US 553453**

(43) Date of publication of application:
**19.06.85 Bulletin 85/25**

(45) Publication of the grant of the patent:
**26.04.89 Bulletin 89/17**

(84) Designated Contracting States:
**DE FR GB IT SE**

(56) References cited:
**EP-A-0 051 351
DE-B-2 718 170
DE-C-2 406 231**

(73) Proprietor: **ILLINOIS TOOL WORKS INC.
8501 West Higgins Road
Chicago Illinois 60631 (US)**

(72) Inventor: **Nelson, John Frederick
911 Herr Drive
New Lenox Illinois 60451 (US)**

(74) Representative: **Gordon, Michael Vincent et al
GILL JENNINGS & EVERY 53-64 Chancery Lane
London WC2A 1HN (GB)**

Courier Press, Leamington Spa, England.

## Description

The present invention relates to fasteners which are capable of lateral adjustment in the securing of workpieces.

Such fasteners will find particular use in the automobile, appliance and like industries. For example, it often happens that a first workpiece (in the form of an article) is to be secured by a plurality of fasteners to a second workpiece (in the form of a plate or panel) which is preformed with a plurality of apertures for engagement with respective ones of the fasteners. Consistently exact fastener and aperture alignment is unlikely to occur in practice. However, bodily movement of the article relatively to the apertured panel may not be possible, and in any event may not bring all of the fasteners into exact alignment with all of the apertures.

It is known from DE-B-2718170 that a fastening clip can include a fastening element which is initially frangibly connected to a support disc. The fastening element is also articulated through integral hinges to a pair of spreader arms which are themselves articulated through integral hinges to a further pair of arms formed on the support disc. In use, the fastening clip is inserted through an apertured panel until the support disc abuts one face of the panel. Pressure on the fastening element breaks its frangible connection with the support disc, thus enabling the spreader arms to be spread and bring the further pair of arms into abutment with the other face of the panel. This arrangement is intended to compensate for tolerance variations in the size of the aperture but can also permit some lateral adjustment of the fastening element relatively to the panel. Although the fastening element is disclosed in association with a predetermined thickness of motor vehicle trim element, it is also known from DE-C-2406231 that a fastening element can be formed with a plurality of laterally extending, resiliently deformable wing elements or prongs for permitting securement to different thicknesses of workpiece.

In accordance with the present invention, a fastener, capable of lateral adjustment in the securing of workpieces, comprising a base and a fastening element, is characterised by said base having a centrally disposed aperture, having a recess in communication with said aperture and having a weld surface of a material that can be fused to a compatible workpiece, said fastening element having a head and having a shank for securement to a second workpiece, said head being floatingly seated in said recess with said shank extending through said aperture, whereby said head can be freely moved within said recess and is captivated thereby both during and after a welding operation in which said weld surface is fused to said compatible workpiece.

It will be noted that the base of the fastener has a weld surface of a material that can be fused to a compatible workpiece. The present invention is particularly pertinent in friction welding, ultrasonic welding and solvent welding. The expression solvent welding here includes the straight forward use of an appropriate adhesive.

Retaining means may be provided for allowing pre-assembly of said element and said base before a welding operation. Said retaining means may comprise at least one resilient member extending outwardly from said element and engageable with a portion of said base near said aperture. In a preferred embodiment, said at least one resilient member comprises a thin flexible resilient annular collar.

To permit the possibility of extensive lateral adjustment, said shank at locations thereof which extend through said aperture may be substantially smaller in maximum lateral dimension than the minimum lateral dimension of said aperture.

To facilitate the possibility of friction welding, at least one yielding driving tab may be provided adjacent said weld surface, said at least one tab being adapted to be used to rotate said base during a friction welding operation and being adapted to yield when an optimal melt condition exists between said weld surface and said compatible workpiece.

To permit the possibility of preventing passage of fluids and maintaining the tension in said element, to avoid rattling, sealing biasing means may be provided in the form of a continuous annular flexible generally frustoconical skirt extending from said base.

Preferably, said base is generally annular and has a centrally disposed generally cylindrical portion, said weld surface is generally annular and is formed on a flange which extends laterally outwardly from one end of said cylindrical portion, there being an inwardly directed rim having an aperture at the opposite end of said cylindrical portion, and said head of said element being axially and radially smaller than said cylindrical portion and radially larger than said aperture in said rim.

A further problem is that the increased use of polymeric (i.e. plastics) materials has created a need for new ways of accurately connecting such materials to each other as well as to different materials, and in particular has created a need for properly positioning the fastener of the present invention with respect to a workpiece to which the fastener is to be secured by welding.

Preferably, therefore, in a combination of the fastener of the present invention and a compatible workpiece, said workpiece and said fastener have locating means for ensuring that said base is positioned at a predetermined location on said compatible workpiece during and after a welding operation.

Said locating means may comprise at least one surface interruption on said workpiece for resisting lateral movement of said fastener relative to said workpiece, and indeed may comprise a plurality of concentric annular protrusions moulded integrally with said workpiece, and a matching plurality of concentric annular protrusions on said weld surface.

If said locating means comprises at least one annular formation moulded integrally with said workpiece, it may be that at least a portion of said weld surface is generally circular and fits complementarily with said at least one annular formation on said workpiece.

In a preferred embodiment, means are provided for assuring proper positioning of said fastener in a direction generally parallel to the axis of said fastener, said positioning means comprising cross ribs on said workpiece.

The purpose of said locating means is to provide a rough placement guide. In the preferred embodiment, once roughly positioned the base is welded to the article while the fastening element is captivated within the recess. The shape of the locating means is such that welding is prevented between the fastening element and the article. After welding, fine lateral adjustment can be made between the fastening element and the aperture panel. The result is an easier assembly operation and simplified moulding of parts.

A fastener, and a combination, in accordance with the present invention, will now be described, by way of example only, with reference to the accompanying drawings, in which:

Figure 1 is a sectional view of a base of the fastener;

Figure 2 is a sectional view of a fastening element of the fastener;

Figure 3 is an elevational view of a portion of an article to be fastened by the fastener;

Figure 4 is a sectional view of the base and the fastening element as pre-assembled;

Figure 5 is a bottom end view of the pre-assembled fastener of Figure 4; and

Figure 6 is a sectional view of the combination of the fastener as welded to the article, also showing an apertured workpiece to which the article is attached by the fastener.

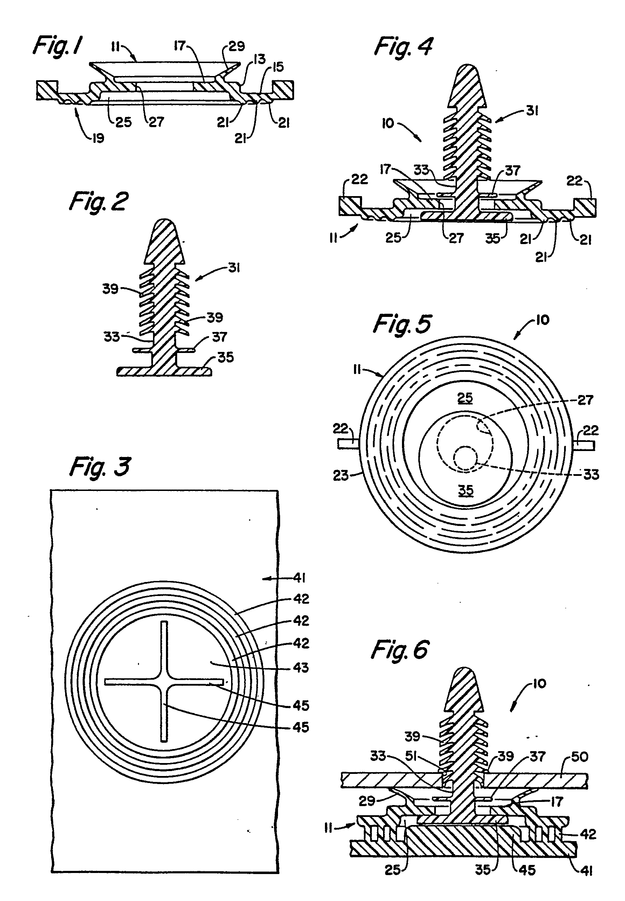

Referring to the drawings, Figures 1 and 2 show the two parts of the fastener of the present invention in an unassembled condition, the fastener possibly being formed of a plastics material such as a thermoplastics material.

Base 11 shown in Figure 1 comprises a generally low-profile cylinder 13 with an outwardly directed annular flange 15 at the lower end of the cylinder 13 and an inwardly directed rim 17 at the opposite end of the cylinder 13. The flange 15 has a weld surface 19 which includes a series of concentric circular ribs 21. The cylinder 13 forms a recess 25 in the base 11, and the recess 25 communicates with an aperture 27 in the rim 17. A relatively thin tapering frustoconical skirt 29 extends from the rim 17.

Fastening element 31 shown in Figure 2 has an elongate shank 33 with a head 35 at one end. The element 31 shown has laterally extending prongs 39, but the prongs 39 could be replaced by any of a variety of fastenings including push, snap and resilient self-expanding types. A collar 37 projects outwardly from the shank 33 near the head 35.

Figure 3 shows concentric rings 42 moulded in an article 41. The rings 42 protrude from an adjacent surface 43 of the article. The rings 42 on the article 41 and the annular ribs 21 on the base 11 are complementary in shape such that the base 11 can be positioned on the article 41 at a specific location. The interfitting complementary surface configurations of the ribs 21 and the rings 42 facilitate welding of the base 11 to the article 41. protruding cross ribs 45 form an abutment against which the head 35 can react after attachment of the base 11 to the article 41.

Figures 4 and 5 show the two-part fastener 10 assembled but unattached to the article 41. The head 35 fits loosely within the recess 25 so that the fastening element 31 can be moved laterally relative to the base 11. The collar 37 is snappingly engaged by the rim 17 as the shank 33 and the collar 37 are inserted, from below as shown in Figure 4, through the aperture 27 in the rim 17. Either the collar 37 or the inner portion of the rim 17 or both may be resiliently flexible to achieve the engaging relationship between the two parts of the fastener 10. Once assembled the fastener is ready to be attached. In the embodiment shown the base 11 has driving tabs 22 formed at the outer edge 23 thereof. The tabs 22 are used to spin the base and achieve a friction weld between the base and the article 41. While the preferred embodiment of the invention is adapted for friction welding, it is clear that the invention has applicability when other methods of attachment are used. The lateral adjustability of the fastener 10 is shown particularly clearly in Figure 5. The head 35 can move laterally within the recess 25, because the diameter of the shank 33 is significantly less than the diameter of the aperture 27.

The tabs 22 are located adjacent to the weld surface 19 so that, when an optimal melt condition exists at the interface between the surface 19 and the article 41, the tabs will yield and thereby terminate the application of rotative force to the base 11. This technique is the subject of our European patent application EP 0 112 074 AI, claiming priority from US patent applications 446 899 and 462 270 to which the reader is invited to refer for further information.

Figure 6 shows a complete assembly including the fastener 10, the article 41 to which the fastener 10 is welded, and an apertured panel 50 to which the article 41 is mounted. The ability for lateral movement of the fastening element 31 within the recess 25 allows an installer to insert the shank 33 into an aperture 51 in the panel 50 even if the article 41 is not laterally adjustable. This is particularly important in making blind connections where tolerances accumulate and where the likelihood of consistently exact aperture and fastener alignment is remote. The rings 42 project from the article 41. The height of the rings 42 may be specified to achieve a desired spacing in a direction generally perpendicular to the planes of the panel 50 and the article 41. It may be desirable to form a surface indentation in the article 41 if the article is thick enough. If several fasteners are used, various heights can be specified to achieve an overall slope of the article 41 relative to the panel 50. This allows the designer to specify a single size of fastener even for different situations.

It should be noted that the skirt 29 has two functions. One function is to prevent moisture entering through the aperture 51 from reaching the article 41 which may be part of the interior finish of an automobile, for example. The second function is to maintain tension in the shank 33 of the fastening element 31. The skirt 29 will resiliently deflect upon insertion of the shank 33 into the apertured panel 50 to such an extent that at least one or more sets of the prongs 39 have passed through the panel 50. Once insertion force is stopped the resilience of the skirt 29 will react against one side of the panel 50, while the prongs 39 engage the opposite side. The resulting tension in the shank 33 ensures a snug non-rattling connection between the fastener 10, the article 41 and the panel 50.

The cross ribs 45 are formed in the article 41 to maintain the perpendicularity of the shank 33 relative to the rim 17. The cross ribs 45 stabilise the shank 33 when bending forces are applied to the shank 33. Upon the application of bending forces, one side of the head 35 abuts the ribs 45, and the other side of the head 35 abuts the rim 17. Preferably, there is only a very small amount of possible axial movement of the head 35 within the recess 25 so that resistance to bending occurs with a minimum of deflection. Some small amount of axial movement of the head 35, however, is desirable so that the fastening element 31 can be moved laterally as discussed above. That is, the axial distance between the rim 17 and the ribs 45 of the welded assembly is preferably slightly greater than the thickness of the head 35. It should also be noted that the cross ribs 45 are designed to support the head 35 with a minimum of surface contact so as to prevent inadvertent fusion between the fastening element 31 and the article 41.

## Claims

1. A fastener (10), capable of lateral adjustment in the securing of workpieces (41, 50), comprising a base (11) and a fastening element (31), characterised by said base (11) having a centrally disposed aperture (27), having a recess (25) in communication with said aperture (27) and having a weld surface (19) of a material that can be fused to a compatible workpiece (41), said fastening element (31) having a head (35) and having a shank (33) for securement to a second workpiece (50), said head (35) being floatingly seated in said recess (25) with said shank (33) extending through said aperture (27), whereby said head (35) can be freely moved within said recess (25) and is captivated thereby both during and after a welding operation in which said weld surface (19) is fused to said compatible workpiece (41).

2. A fastener according to claim 1, characterised in that retaining means (17, 37) is provided for allowing pre-assembly of said element (31) and said base (11) before a welding operation.

3. A fastener according to claim 2, characterised in that said retaining means comprises at least one resilient member (37) extending outwardly from said element (31) and engageable with a portion (17) of said base (11) near said aperture (27).

4. A fastener according to claim 3, characterised in that said at least one resilient member comprises a thin flexible resilient annular collar (37).

5. A fastener according to any preceding claim, characterised in that said shank (33) at locations thereof which extend through said aperture (27) is substantially smaller in maximum lateral dimension than the minimum lateral dimension of said aperture (27).

6. A fastener according to any preceding claim, characterised in that at least one yielding driving tab (22) is provided adjacent said weld surface (19), said at least one tab (22) being adapted to be used to rotate said base (11) during a friction welding operation and being adapted to yield when an optimal melt condition exists between said weld surface (19) and said compatible workpiece (41).

7. A fastener according to any preceding claim, characterised in that sealing biasing means (29) is provided for preventing passage of fluids therepast and for maintaining tension in said element (31).

8. A fastener according to claim 7, characterised in that said sealing biasing means comprises a continuous annular flexible generally frustoconical skirt (29) extending from said base (11).

9. A fastener according to any preceding claim, characterised in that said base (11) is generally annular and has a centrally disposed generally cylindrical portion (13), said weld surface (19) is generally annular and is formed on a flange (15) which extends laterally outwardly from one end of said cylindrical portion (13), there being an inwardly directed rim (17) having an aperture (27) at the opposite end of said cylindrical portion (13), and said head (35) of said element (31) being axially and radially smaller than said cylindrical portion (13) and radially larger than said aperture (27) in said rim (17).

10. A combination of a fastener (10) according to any preceding claim and a compatible workpiece (41), said workpiece (41) and said fastener (10) having locating means (21, 42) for ensuring that said base (11) is positioned at a predetermined location on said compatible workpiece (41) during and after a welding operation.

11. A combination according to claim 10, characterised in that the workpiece is a moulded workpiece and the welding operation is a friction welding operation.

12. A combination according to claim 10 or claim 11, characterised in that said locating means comprises at least one surface interruption (42) on said workpiece (41) for resisting lateral movement of said fastener (10) relative to said workpiece (41).

13. A combination according to any one of claims 10 to 12, characterised in that said locating means comprises at least one annular formation (42) moulded integrally with said workpiece (41).

14. A combination according to claim 13, characterised in that at least a portion of said weld surface (19) is generally circular and fits complementarily with said at least one annular formation (42) on said workpiece (41).

15. A combination according to any one of claims 10 to 14, characterised in that said locating means comprises a plurality of concentric annular protrusions (42) moulded integrally with said workpiece (41), and a matching plurality of concentric annular protrusions (21) on said weld surface (19).

16. A combination according to any one of claims 10 to 15, characterised in that means (45) are provided for assuring proper positioning of said fastener (10) in a direction generally parallel to the axis of said fastener (10).

17. A combination according to claim 16, characterised in that said positioning means comprises cross ribs (45) on said workpiece (41).

## Patentansprüche

1. Befestiger, der beim Sichern von Werkstücken (41, 50) eine seitliche Verstellung erlaubt, mit einer Grundplatte (11) und einem Befestigungselement (31), dadurch gekennzeichnet, daß die Grundplatte (11) eine mittig angeordnete Öffnung (27) aufweist, die eine Eintiefung (25) in Verbindung mit der Öffnung (27) und eine Schweißfläche (19) eines Werkstoffes aufweist, der mit einem verträglichen Werkstück (41) verschmolzen werden kann, wobei das Befestigungselement (31) einen Kopf (35) und einen Schaft (33) zur sicheren Befestigung an einem zweiten Werkstück (50) aufweist, wobei der Kopf (35) schwimmend in der Eintiefung (25) aufgenommen wird, wobei der Schaft (33) sich durch die Öffnung (27) erstreckt, wodurch der Kopf (35) frei in der Eintiefung (25) bewegt werden kann und während und nach einem Schweißvorgang gehalten wird, in dem die Schweißfläche (19) mit dem verträglichen Werkstück (41) verschmolzen wird.

2. Befestiger nach Anspruch 1, dadurch gekennzeichnet, daß ein Haltemittel (17, 37) vorgesehen ist, um eine Vormontage des Elements (31) und der Grundplatte (11) vor einem Schweißvorgang zu ermöglichen.

3. Befestiger nach Anspruch 2, dadurch gekennzeichnet, daß das Haltemittel mindestens ein elastisches Teil (37) aufweist, das sich nach außen von dem Element (31) erstreckt und mit einem Abschnitt (17) der Grundplatte (11) nahe der Öffnung (27) in Eingriff bringbar ist.

4. Befestiger nach Anspruch 3, dadurch gekennzeichnet, daß mindestens ein elastisches Teil einen dünnen, biegsamen, elastischen, ringförmigen Kragen (37) aufweist.

5. Befestiger nach einem der vorangegangenen Ansprüche, dadurch gekennzeichnet, daß der Schaft (33) an den Stellen, die sich durch die Öffnung (27) erstrecken, wesentlich kleiner in seiner größten seitlichen Abmessung ist als die kleinste seitliche Abmessung der Öffnung (27).

6. Befestiger nach einem der vorangegangenen Ansprüche, dadurch gekennzeichnet, daß mindestens eine nachgiebige Antriebs-Handhabe (22) nahe der Schweißfläche (19) vorgesehen ist, wobei die mindestens Handhabe (22) benutzt wird, um die Grundplatte (11) während eines Reibungsschweißvorganges zu drehen, und nachgibt, wenn eine optimale Schweißbedingung zwischen der Schweißfläche (19) und dem verträglichen Werkstück (41) herrscht.

7. Befestiger nach einem der vorangegangenen Ansprüche, dadurch gekennzeichnet, daß ein dichtendes Vorspannmittel (29) vorgesehen ist, um Durchtreten von Strömungsmittel zu verhindern und Spannung in dem Element (31) zu halten.

8. Befestiger nach Anspruch 7, dadurch gekennzeichnet, daß das dichtende Vorspannmittel eine durchgehende, ringförmige, biegsame, allgemein kegelstumpfförmige Schürze (29) aufweist, die sich von der Grundplatte (11) erstreckt.

9. Befestiger nach einem der vorangegangenen Ansprüche, dadurch gekennzeichnet, daß die Grundplatte (11) allgemein ringförmig ist und einen mittig angeordneten, allgemein zylindrischen Abschnitt (13) aufweist, die Schweißfläche (19) allgemein ringförmig und auf einem Flansch (15) ausgebildet ist, der sich seitlich nach außen von einem Ende des zylindrischen Abschnitts (13) erstreckt, wo sich ein nach innen gerichteter Rand (17) mit einer Öffnung (27) am gegenüberliegenden Ende des Elements (31) befindet, und der Kopf (35) des Elements (31) axial und radial kleiner als der zylindrische Abschnitt (13) und radial größer als die Öffnung (27) in dem Rand (17) ist.

10. Kombination eines Befestigers (10) nach einem der vorangegangenen Ansprüche mit einem verträglichen Werkstück (41), dadurch gekennzeichnet, daß das Werkstück (41) und der Befestiger (10) Plazierungsmittel (21, 42) aufweisen, um sicherzustellen, daß die Grundplatte (11) an einer vorbestimmten Stelle auf dem verträglichen Werkstück (41) während und nach einem Schweißvorgang plaziert wird.

11. Kombination nach Anspruch 10, dadurch gekennzeichnet, daß das Werkstück ein spritzgeformtes Werkstück und der Schweißvorgang ein Reibschweißvorgang ist.

12. Kombination nach Anspruch 10 oder 11, dadurch gekennzeichnet, daß das Plazierungsmittel mindestens eine Flächenunterbrechung (42) auf dem Werkstück (41) aufweist, um einer seitlichen Bewegung auf dem Befestiger (10) relativ zum Werkstück (41) zu widerstehen.

13. Kombination nach einem der Ansprüche 10 bis 12, dadurch gekennzeichnet, daß das Plazierungsmittel mindestens eine ringförmige Ausformung (42) aufweist, die integriert mit dem Werkstück (42) spritzgeformt ist.

14. Kombination nach Anspruch 13, dadurch gekennzeichnet, daß mindestens ein Abschnitt der Schweißfläche (19) allgemein kreisrund ist und komplementär zu der mindestens einen Ausformung (42) auf dem Werkstück (41) paßt.

15. Kombination nach einem der Ansprüche 10 bis 14, dadurch gekennzeichnet, daß das Plazierungsmittel mehrere konzentrische ringförmige Vorsprünge (42) aufweist, die integriert mit dem Werkstück (41) spritzgeformt sind sowie mehrere passende, konzentrische, ringförmige Vorsprünge (21) auf der Schweißfläche (19).

16. Kombination nach einem der Ansprüche 10 bis 15, dadurch gekennzeichnet, daß Mittel (45) vorgesehen sind, um das richtige Positionieren des Befestigers (10) in einer Richtung sicherzustellen, die allgemein paralell zur Achse des Befestigers (10) verläuft.

17. Kombination nach Anspruch 16, dadurch gekennzeichnet, daß das Positioniermittel Kreuzrippen (45) auf dem Werkstück (41) aufweist.

## Revendications

1. Attache (10), pouvant être ajustée latéralement lors de la fixation de pièces (41, 50), comprenant une embase (11) et un élément (31) de fixation, caractérisée par le fait que ladite embase (11) présente une ouverture centrale (27), un évidement (25) en communication avec ladite ouverture (27) et une surface à souder (19) en une matière qui peut être soudée par fusion à une pièce compatible (41), ledit élément (31) de fixation comportant une tête (35) et une tige (33) pour une fixation à une seconde pièce (50), ladite tête (35) étant logée de façon flottante dans ledit évidement (25) alors que ladite tige (33) s'étend à travers ladite ouverture (27), de manière que ladite tête (35) puisse être déplacée librement à l'intérieur dudit évidement (25) et soit ainsi retenue prisonnière à la fois pendant et après une opération de soudage au cours de laquelle ladite surface à souder (19) est soudée par fusion à ladite pièce compatible (41).

2. Attache selon la revendication 1, caractérisée en ce que des moyens de retenue (17, 37) sont prévus pour permettre un préassemblage dudit élément (31) et de ladite embase (11) avant une opération de soudage.

3. Attache selon la revendication 2, caractérisée en ce que lesdits moyens de retenue comprennent au moins un organe élastique (37) s'étendant vers l'extérieur dudit élément (31) et pouvant s'enclencher avec une partie (17) de ladite embase (11) au voisinage de ladite ouverture (27).

4. Attache selon la revendication 3, caractérisée en ce que ledit, au moins un, organe élastique comprend une collerette annulaire élastique, flexible et mince (37).

5. Attache selon l'une quelconque des revendications précédentes, caractérisée en ce que ladite tige (33), en des points de cette tige qui s'étendent à travers ladite ouverture (27), est sensiblement plus petite, en dimension latérale maximale, que la dimension latérale minimale de ladite ouverture (27).

6. Attache selon l'une quelconque des revendications précédentes, caractérisée en ce qu'au moins une patte d'entraînement (22), pouvant céder, est prévue à proximité immédiate de ladite surface à souder (19), ladite, au moins une, patte (22) étant conçue pour être utilisée pour faire tourner ladite embase (11) pendant une opération de soudage par friction et étant conçue pour céder lorsqu'une condition de fusion optimale existe entre ladite surface à souder (19) et ladite pièce compatible (41).

7. Attache selon l'une quelconque des revendications précédentes, caractérisée en ce que des moyens (29) d'étanchéité et de rappel sont prévus pour empêcher le passage de fluides au-delà d'eux et pour maintenir une tension dans ledit élément (31).

8. Attache selon la revendication 7, caractérisée en ce que lesdits moyens d'étanchéité et de rappel comprennent une jupe globalement tronconique, continue, annulaire et flexible (29), s'étendant à partir de ladite embase (11).

9. Attache selon l'une quelconque des revendications précédentes, caractérisée en ce que ladite embase (11) est globalement annulaire et comporte une partie centrale, globalement cylindrique (13), ladite surface à souder (19) est globalement annulaire et est formée sur une aile (15) qui s'étend latéralement vers l'extérieur d'une extrémité de ladite partie cylindrique (13), un rebord (17), orienté vers l'intérieur, présentant une ouverture (27) à l'extrémité opposée de ladite partie cylindrique (13), et ladite tête (35) dudit élément (31) étant axialement et radialement plus petite que ladite partie cylindrique (13) et radialement plus grande que ladite ouverture (27) située dans ledit rebord (17).

10. Combinaison d'une attache (10) selon l'une quelconque des revendications précédentes et d'une pièce compatible (41), ladite pièce (41) et ladite attache (10) comportant des moyens (21, 42) de positionnement destinés à assurer que ladite embase (11) est placée en une position prédéterminée sur ladite pièce compatible (41) pendant et après une opération de soudage.

11. Combinaison selon la revendication 10, caractérisée en ce que la pièce est une pièce moulée et l'opération de soudage est une opération de soudage par friction.

12. Combinaison selon la revendication 10 ou la revendication 11, caractérisée en ce que lesdits moyens de positionnement comprennent au moins une interruption de surface (42) suivant ladite pièce (41) pour résister à un mouvement latéral de ladite attache (10) par rapport à ladite pièce (41).

13. Combinaison selon l'une quelconque des revendications 10 à 12, caractérisée en ce que lesdits moyens de positionnement comprennent au moins une configuration annulaire (42) venue de moulage avec ladite pièce (41).

14. Combinaison selon la revendication 13, caractérisée en ce qu'au moins une partie de ladite surface à souder (19) est globalement circulaire et s'ajuste de façon complémentaire à ladite, au moins une, configuration annulaire (42) située sur ladite pièce (41).

15. Combinaison selon l'une quelconque des revendications 10 à 14, caractérisée en ce que lesdits moyens de positionnement comprennent plusieurs saillies annulaires concentriques (42) venues de moulage avec ladite pièce (41), et un groupe correspondant de saillies annulaires concentriques (21) situées sur ladite surface à souder (19).

16. Combinaison selon l'une quelconque des revendications 10 à 15, caractérisée en ce que des moyens (45) sont prévus pour assurer une mise en position appropriée de ladite attache (10) dans une direction globalement parallèle à l'axe de ladite attache (10).

17. Combinaison selon la revendication 16, caractérisée en ce que lesdits moyens de mise en position comprennent des nervures transversales (45) sur ladite pièce (41).

*Fig. 1*

11 17 29 13 15
25 27 21 21
19 21

*Fig. 2*

31
39 39
33 37
35

*Fig. 3*

41
42
42
42
43
45
45

*Fig. 4*

10 31
22 17 33 37 22
11 25 27 35 21 21
21

*Fig. 5*

10
11 25 27
22 22
23 33
35

*Fig. 6*

10
39 39 37 50
33 51
29 17
11 42
25 35 45 41